# EUROPÄISCHE PATENTSCHRIFT

(11) **EP 0 460 372 B1**
(45) Veröffentlichungstag und Bekanntmachung des Hinweises auf die Patenterteilung: **12.10.1994**
(21) Anmeldenummer: 91105336.1
(22) Anmeldetag: 04.04.1991
(51) Int. Cl.: F16D 65/60

(54) **Einrichtung zum selbsttätigen Nachstellen einer Bremse, insbesondere Fahrzeugbremse**
Device for automatically adjusting a brake, especially vehicle brake
Dispositif pour ajuster automatiquement un frein, spécialement frein de véhicule

(30) Priorität: 05.06.1990 DE 4017949
(43) Veröffentlichungstag der Anmeldung: 11.12.1991
(73) Patentinhaber: WABCO GmbH, 30453 Hannover (DE)
(72) Erfinder: Frania, Josef, W-3000 Hannover (DE)
(74) Vertreter: Schrödter, Manfred, Dipl.-Ing.

(56) Entgegenhaltungen:
- WO-A-82/01922
- DE-B- 1 480 038
- US-A- 1 992 117

## Beschreibung

Die Erfindung betrifft eine Einrichtung zum selbsttätigen Nachstellen einer Bremse, gemäß dem Oberbegriff des Patentanspruchs 1.

Eine derartige Einrichtung ist durch die WO 82/01922 vorbekannt. Die vorbekannte Einrichtung weist eine Nachstelleinrichtung auf, mit der Teile eines Bremsgestänges, nämlich eine Bremsbetätigungswelle und ein darauf angeordneter Bremshebel gegeneinander verstellbar sind. Die Verstellung dient einer kontinuierlichen Nachjustierung des Bremsgestänges, das infolge Bremsbelagverschleißes einer Abweichung von einer vorgegebenen Ausgangsstellung unterliegt. Die Nachstelleinrichtung ist während der Bewegung des Bremshebels in Bremsbetätigungsrichtung mit einer Antriebseinrichtung betätigbar, die zwischen einem relativ zum Bremshebel festen Bezugspunkt und der Nachstelleinrichtung angeordnet ist. Zwischen der Antriebseinrichtung und der Nachstelleinrichtung ist eine Zahnkupplung mit vergrößertem Zahnspiel als Leerwegeinrichtung wirksam, die einen Bremshebelausschlag ohne eine Betätigung der Nachstelleinrichtung gestattet. Übertragungsmittel der Antriebseinrichtung bestehen aus einem Stirnradpaar und einem damit verbundenen Schneckentrieb. Diese Übertragungsmittel gestatten eine großzügige Einbautoleranz des Bremshebels zu dem festen Bezugspunkt. Nachteilig ist hier der relativ große Bauaufwand für die Übertragungsmittel sowie das Erfordernis eines erhöhten Fertigungsaufwandes für deren auf versetzt zueinander verlaufenden Drehachsen angeordneten Lagerstellen.

Durch die DE-AS 14 80 038 ist eine Einrichtung, ähnlich der gattungsgemäßen, bekannt, bei der anstelle des vorstehend erwähnten Schneckentriebes ein Zahnstangentrieb verwendet wird. Die Nachstellung des verschleißbedingten Bremslüftspiels erfolgt durch die Bewegung des Bremshebels nicht wie bei der gattungsgemäßen Einrichtung in der Bremsbetätigungsrichtung sondern der Bremslöserichtung. Die Antriebskraft am Verstellmechanismus für die Verstellung des Bremslüftspieles während des Bremszylinderlösehubes (Bremslöserichtung) kann hierbei nur aus vorhandenen Rückzugfedern der Bremsbetätigungselemente gewonnen werden. Bei relativ schwergängigem Bremsgestänge müssen deshalb oft außen am Bremsgestänge zusätzliche Hilfsrückzugfedern angeordnet werden, damit noch ausreichend Antriebskraft für die Nachstellbewegung und das Lösen der Bremse zur Verfügung steht. Der Zahnstangentrieb benötigt einen gehäusefesten Anschlag, durch den dessen Ausgangsstellung gegeben ist. Die Einrichtung erfordert daher in nachteiliger Weise eine genaue Justierung des Bremshebels zum festen Bezugspunkt. Das Überschreiten einer Abweichungstoleranz kann, nach Erreichen des gehäusefesten Anschlages durch den Zahnstangentrieb, zum Bruch der Einrichtung führen.

Der Erfindung liegt daher die Aufgabe zugrunde, eine Einrichtung der eingangs genannten Art so zu verbessern, daß im Vergleich zu der eingangs erwähnten Einrichtung mit einfachen Bauelementen und geringem Fertigungsaufwand eine großzügige Einbautoleranz des Bremshebels gegenüber dessen fahrzeugbezogenem Festpunkt erzielt wird.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß sich die Nachstelleinrichtung durch wiederholte Bremsvorgänge im relativ großen Winkelbereich selbsttätig an eine durch die Einbauverhältnisse am Fahrzeug vorgegebene Ausgangsstellung des Bremshebels anpassen kann und daher eine genaue Justierung der Einrichtung bei Erstmontage nicht erforderlich ist.

Die Erfindung hat weiterhin den Vorteil der einfachen Handhabung, z.B. bei Neujustierung infolge Bremsbelagwechsels, wobei eine Zerstörung ihrer Bauteile durch eine eventuelle Fehleinstellung vermieden wird.

Die Erfindung wird anhand eines Ausführungsbeispiels, das in der Zeichnung dargestellt ist, näher erläutert.

Es zeigen:
- **Fig.1**: eine Bremsbetätigungseinrichtung,
- **Fig.2**: die Einrichtung gemäß Fig.1 in Seitenansicht und Schnitt,
- **Fig.3**: eine Teilansicht des Antriebes der Einrichtung gemäß Fig.1
- **Fig.4**: eine Leerwegeinrichtung der Einrichtung gemäß Fig.1.

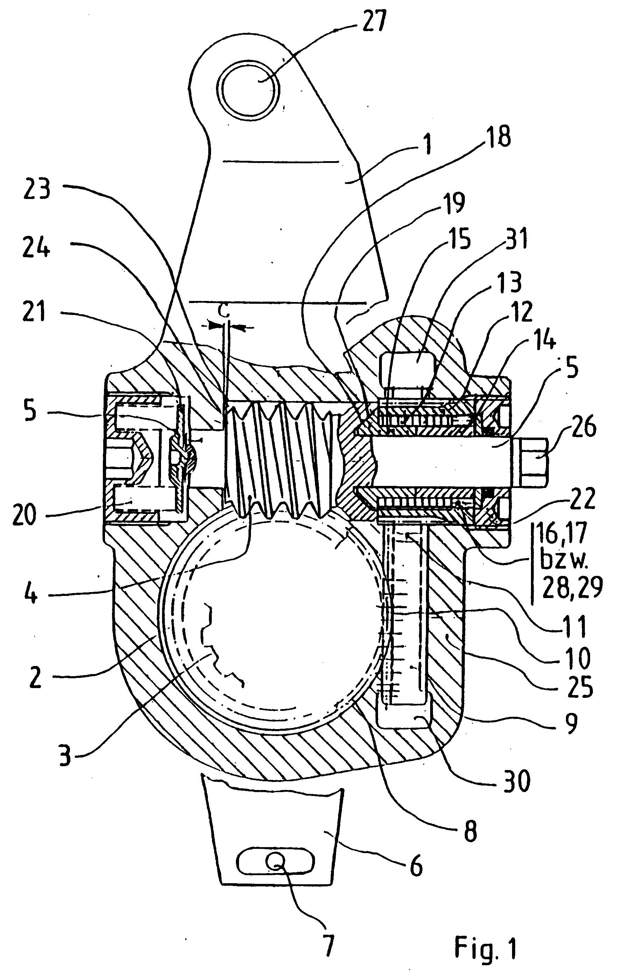

Die Einrichtung ist für eine Kompensation des Bremsbelagverschleißes durch selbsttätiges Nachstellen des Bremsgestänges vorgesehen. Gleiche Bauelemente sind in den Fig.1, 2, 3 und 4 mit gleichen Positionsnummern versehen.

Die Fig.1 zeigt einen Bremshebel (1), der über ein Schneckenrad (2) mit einem Keilprofil (3) mit einer nicht dargestellten Bremsbetätigungswelle verbunden ist.

Die Bremsbetätigungswelle ist in bekannter Weise um einen begrenzten Winkelausschlag um ihre Längsachse verschwenkbar, wodurch vorzugsweise durch S-Nocken bewegbare Bremsbacken an der Bremstrommel zur Anlage gebracht werden können. Das mit der Bremsbetätigungswelle drehfest verbundene Schneckenrad (2) steht mit einer Schnecke (4) im Eingriff, deren Schneckenwelle (5) und Wellenfortsatz (5') im Bremshebel (1) drehbar gelagert und rechtwinklig zur Bremsbetätigungswelle angeordnet ist. Das Schneckenrad (2) und die Schnecke (4) bilden die Nachstelleinrichtung (2, 4) der Bremsbetätigungseinrichtung.

Ein Verstellhebel (6), der mit einem relativ zum Bremshebel (1) festen Bezugspunkt (7) des Fahrzeuges verbunden ist, ist drehfest mit einem konzentrisch zur Längsachse der Bremsbetätigungswelle, bzw. Drehachse des Bremshebels (1) angeordneten Zahnkranz (8) verbunden.

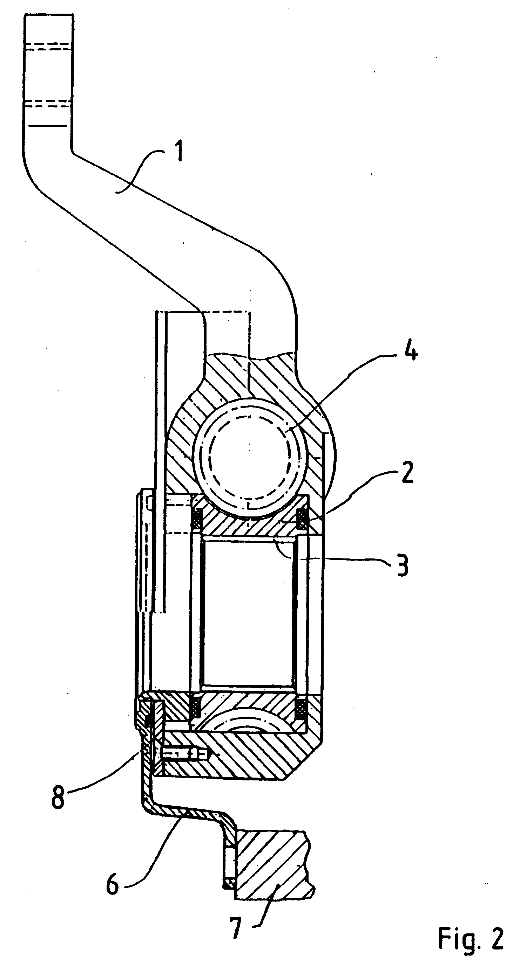

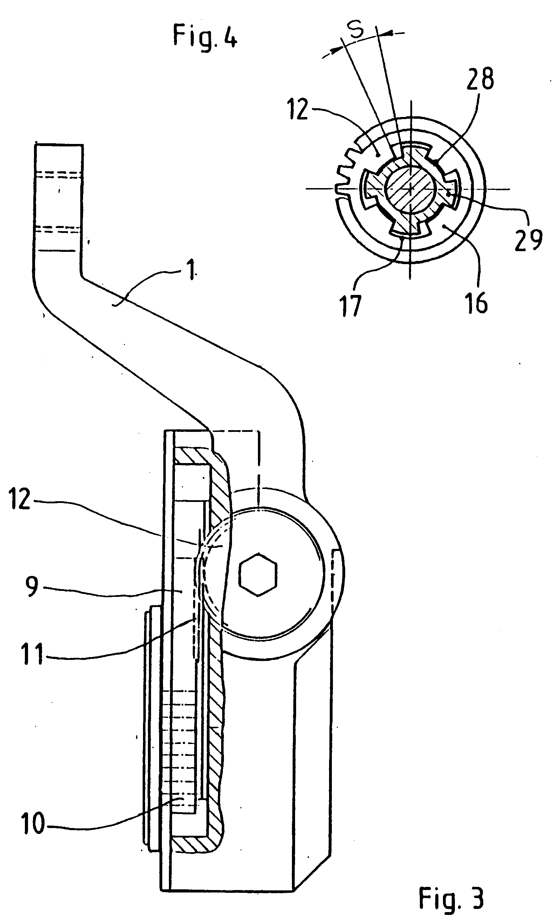

Der Bremshebel (1) ist um den Zahnkranz (8) verschwenkbar. Eine Zahnstange (9) greift mit einer ersten Verzahnung (10) in den Zahnkranz (8) und mit einer zweiten Verzahnung (11) in ein auf der Schneckenwelle (5) drehbar gelagertes Ritzel (12) ein. (Fig.1 und 3). Die drehfeste Verbindung des Verstellhebels (6) mit dem Zahnkranz (8) geht aus Fig.2 hervor.

Der Zahnkranz (8), die Zahnstange (9) und das Ritzel (12) bilden eine als Zahnstangentrieb gestaltete Antriebseinrichtung (8, 9, 12) die über eine Einwegkupplung (13, 14, 15) in der Art eines Freilaufs mit der Nachstelleinrichtung (2, 4) in Wirkverbindung steht. Die Einwegkupplung (13, 14, 15) weist hülsenförmige Kupplungsteile (14) und (15) auf, die auf der Schneckenwelle (5) drehbar gelagert sind.

Das den Zahnstangentrieb (8, 9, 12) umgebende Gehäuse (25) des Bremshebels (1) ist in Längsrichtung der Zahnstange (9) mit Freiräumen (30, 31) versehen, die so ausgebildet sind, daß der mögliche Ausschlag des Bremshebels (1), relativ zum festen Bezugspunkt (7), größer sein kann als der, der durch das Bremslüftspiel vorgegeben ist.

Die Verbindung der Antriebseinrichtung (8, 9, 12) mit der Nachstelleinrichtung (2, 4) geschieht, wie aus der Fig.4 hervorgeht, über eine Leerwegeinrichtung, die in der Art einer Zahnkupplung (16, 17, 28, 29) ausgebildet ist. Das der Antriebseinrichtung (8, 9, 12) zugeordnete Ritzel (12) weist mindestens einen Zahn (16) oder eine Zahnlücke (17) auf, die mit mindestens einer Zahnlücke (28) oder einem Zahn (29) des der Einwegkupplung (13, 14, 15) zugeordneten Kupplungsteils (14) im Eingriff befindlich ist. Die Zähne (16, 29) und die Zahnlücken (17, 28) können am inneren Umfang des Ritzels (12) bzw. am äußeren Umfang des Kupplungsteils (14) angeordnet sein.

Die Zahnkupplung (16, 17, 28, 29) ist mit einem den Leerweg erzeugenden Zahnspiel (S) versehen. Das Ritzel (12) und das Kupplungsteil (14) sind um ihre Drehachsen, dem Zahnspiel (S) entsprechend, gegeneinander verdrehbar.

Dieses Zahnspiel (S) entspricht einem Winkelausschlag des Bremshebels (1) und der Bremsbetätigungswelle, bei dem die Bremsbacken ein sogenanntes Lüftspiel durchfahren und von der nichtbetätigten Ausgangsstellung zur Anlage an die Bremstrommel gebracht werden.

Die Verbindung der beiden Kupplungsteile (14) und (15) erfolgt mittels einer Schlingfeder (13), die mit radialer Vorspannung und jeweils mit etwa halber Windungsanzahl auf die zylindrischen Abschnitte der beiden Kupplungsteile (14) und (15) aufgepreßt ist.

Die Schnecke (4) hat auf ihrer der Antriebseinrichtung (8, 9, 12) zugewandten Seite eine kegelige Ausnehmung (18) in die ein kegeliger Ansatz (19) des Kupplungsteils (15) eingreift. Mit einer Druckfeder (20) sind über einen Federteller (21) die Schnecke (4) und die Kupplungsteile (14) und (15) in ihrer Längsrichtung gegen einen als Stützlager ausgebildeten Gehäusedeckel (22) vorgespannt. Hierdurch ist an den kegeligen Ausbildungen (18, 19) eine kraftschlüssige Verbindung der Schnecke (4) mit dem Kupplungsteil (15) gebildet.

An der der Antriebseinrichtung (8, 9, 12) abgewandten Seite der Schnecke (4) ist zwischen einem gehäuseseitigen Anschlag (23) und einer Anlauffläche (24) der Schnecke (4) ein Spiel (C) vorhanden, um die die Schnecke (4) in Richtung auf die Druckfeder (20) bewegbar ist.

Die Schneckenwelle (5) weist an ihrem aus dem Gehäuse (25) des Bremshebels (1) herausragenden Ende eine Formgebung (26) für den Ansatz eines Schlüssels auf, mit dem die Nachstelleinrichtung (2, 4) manuell betätigbar ist. Der Bremshebel (1) weist eine Lagerstelle (27) auf, für die Verbindung mit einem Betätigungselement, z.B. einem Bremszylinder.

Die Wirkungsweise der Einrichtung ist wie folgt:
Bei einem leichten Bremsvorgang führt der Bremshebel (1) mit der Bremsbetätigungswelle eine entsprechende Schwenkbewegung aus, wodurch die Bremsbacken an der Bremstrommel zur Anlage gebracht werden. Der Bremshebel (1) bewegt sich dabei relativ zu dem mit dem Bezugspunkt (7) verbundenen Verstellhebel (6) und dem mit dem Verstellhebel (6) drehfest verbundenen Zahnkranz (8). Die Schwenkbewegung des Bremshebels (1) führt somit zu einer Relativbewegung der Zahnstange (9) zum Zahnkranz (8), wodurch die Schwenkbewegung des Bremshebels (1) in eine entsprechende Drehbewegung des Ritzels (12) umgewandelt wird. Bei idealem Bremslüftspiel zwischen Bremsbacken und Bremstrommel wird hierbei das Zahnspiel (5) der Zahnkupplung (16, 17) durchfahren.

Bei einer weiteren Erhöhung der Bremskraft an der Lagerstelle (27) des Bremshebels (1) erfolgt infolge der in dem mechanischen Teil der Bremsanlage vorhandenen Elastizität eine weitergehende Schwenkbewegung des Bremshebels (1), die auch eine weitergehende Drehbewegung des Ritzels (12) bewirkt. Durch ein damit erzeugtes, erhöhtes Bremsmoment, welches über die Bremsbetätigungswelle und das Schneckenrad (2) auf die Schnecke (4) übertragen wird, entsteht eine axial gegen die Druckfeder (20) gerichtete Kraft, die bei entsprechender Größe ein Verschieben der Schnecke (4) um das Spiel (C) gegen den Anschlag (23) bewirkt. Dadurch wird die kraftschlüssige Verbindung an den kegeligen Ausbildungen (18, 19) der Schnecke (4) und dem Kupplungsteil (15) aufgehoben. Die Kupplungsteile (14, 15) drehen sich infolge der in der Bremsbetätigungseinrichtung gesperrten Einwegkupplung (13, 14, 15) ohne Mitnahme der Schnecke (4).

Beim Lösen der Bremse verläuft der oben beschriebene Vorgang in umgekehrter Richtung, d.h. die kraftschlüssige Verbindung zwischen den kegeligen Ausbildungen (18, 19) wird wieder hergestellt. Das Kupplungsteil (14) dreht sich unter der Schlingenfeder (13) hindurch, weil die Einwegkupplung in der Bremslöserichtung als Freilauf wirksam ist.

Hat sich an der Radbremse das Lüftspiel zwischen Bremsbacken und Bremstrommel infolge Belagverschleiß und Bremstrommelverschleiß vergrößert, so macht bei Bremsbetätigung der Bremshebel eine größere Schwenkbewegung bis die Bremsbacken an der Bremstrommel vollständig zur Anlage kommen. Während dieser Betätigungsphase sind alle Bauteile des Verstelltriebes miteinander über die vorhandenen Kupplungen verbunden. Dadurch wird während jeder Bremsbetätigung automatisch auch die Schnecke (4) sowie das Schneckenrad (2) mit der Bremsbetätigungswelle in Richtung Spielverkleinerung durch die Nachstelleinrichtung (2, 4) solange weitergedreht bis das Spiel zwischen Bremsbacken und Bremstrommel sich auf das gewünschte Maß verkleinert hat.

## Patentansprüche

1. Einrichtung zum selbsttätigen Nachstellen einer Bremse, insbesondere einer Fahrzeugbremse, mit folgenden Merkmalen:
a) es ist ein auf einer Bremsbetätigungswelle angeordneter Bremshebel (1) vorgesehen mit einer Nachstelleinrichtung (2, 4) zwischen dem Bremshebel (1) und der Bremsbetätigungswelle, mit der die Bremsbetätigungswelle, relativ zum Bremshebel (1), um ihre Drehachse verstellbar ist;
b) zur Betätigung der Nachstelleinrichtung (2, 4) ist eine Antriebseinrichtung (8, 9, 12) vorgesehen, die zwischen einem relativ zum Bremshebel (1) festen Bezugspunkt (7) und der Nachstelleinrichtung (2, 4) angeordnet ist;
c) die Antriebseinrichtung (8, 9, 12) ist mit der Nachstelleinrichtung (2, 4) über eine Einwegkupplung (13, 14, 15) verbindbar, die nur dann eine drehfeste Verbindung der Antriebseinrichtung (8, 9, 12) mit der Nachstelleinrichtung (2, 4) bildet, wenn die Nachstelleinrichtung zur Verringerung des Bremslüftspiels zwischen den Bremsbacken und der Bremstrommel in die eine Betätigung der Bremsen bewirkende Richtung bewegt wird;
d) die Einwegkupplung (13, 14, 15) ist so ausgebildet, daß die drehfeste Verbindung der Antriebseinrichtung (8, 9, 12) mit der Nachstelleinrichtung (2, 4) durch die Bewegung des Bremshebels (1) in Bremsbetätigungsrichtung erzeugbar ist;
e) es ist eine Leerwegeinrichtung vorgesehen, die zur Aufhebung der drehfesten Verbindung der Antriebseinrichtung (8, 9, 12) mit der Nachstelleinrichtung (2, 4) während des Überwindens eines vorgegebenen Bremslüftspiels dient,
gekennzeichnet durch folgende Merkmale:
f) die Antriebseinrichtung (8, 9, 12) ist als Zahnstangentrieb ausgebildet und weist einen mit dem festen Bezugspunkt (7) drehfest verbundenen Zahnkranz (8) auf, der mit einer ersten Verzahnung (10) der Zahnstange (9) des Zahnstangentriebes im Eingriff steht;
g) die Zahnstange (9) weist eine zweite Verzahnung (11) auf, die mit einem die Nachstelleinrichtung (2, 4) antreibbaren Ritzel (12) im Eingriff steht,
h) das den Zahnstangentrieb umgebende Gehäuse (25) des Bremshebels (1) ist in Längsrichtung der Zahnstange (9) mit Freiräumen (30, 31) versehen, die so ausgebildet sind, daß der mögliche Ausschlag des Bremshebels (1), relativ zum festen Bezugspunkt (7) und damit der Hub der Zahnstange größer sein kann als der, der durch das Bremslüftspiel vorgegeben ist;

2. Einrichtung nach Anspruch 1, dadurch gekennzeichnet, daß die Leerwegeinrichtung (16, 17; 28, 29) aus einer zwischen dem Ritzel (12) und einem Kupplungsteil (14) der Einwegkupplung (13, 14, 15) angeordneten Zahnkupplung (16, 17; 28, 29) gebildet ist, die einen durch ein Zahnspiel (5) erzeugbaren Leerweg aufweist, der dem vorgegebenen Bremslüftspiel entspricht.

3. Einrichtung nach Anspruch 2, dadurch gekennzeichnet, daß die Zahnkupplung (16, 17; 28, 29) aus mindestens einem Zahn (16) oder einer Zahnlücke (17) des Ritzels (12) und mindestens einer Zahnlücke (28) oder einem Zahn (29) des Kupplungsteils (14) der Einwegkupplung (13, 14, 15) gebildet ist.

4. Einrichtung nach Anspruch 3, dadurch gekennzeichnet, daß die Zähne (16, 29) oder Zahnlücken (17, 28) jeweils am inneren Umfang des Ritzels (12) bzw. am äußeren Umfang des Kupplungsteils (14) angeordnet sind.

## Claims

1. A device for the automatic adjustment of a brake, in particular a vehicle brake, having the following features:
a) a brake lever (1) arranged on a brake operating shaft is provided, having between the brake lever (1) and the brake actuating shaft an adjusting device (2, 4), by means of which the brake operating shaft is displaceable about its axis of rotation relative to the brake lever (1);
b) a drive arrangement (8, 9, 12) which is arranged between a reference point (7) that is fixed relative to the brake lever (1), and the adjusting device (2, 4), is provided for operation of the adjusting device (2, 4);
c) the drive arrangement (8, 9, 12) is arranged to be connected to the adjusting device (2, 4) by way of a one-way coupling (13, 14, 15) which forms a connection of the drive arrangement (8, 9, 12) with the adjusting device (2, 4,) so that they rotate together only when the adjusting device is moved to reduce the brake release clearance between the brake shoes and the brake drum in the direction effecting an actuation of the brakes;
d) the one-way coupling (13, 14, 15) is constructed so that the connection of the drive arrangement (8, 9, 12) to the adjusting device (2, 4) so that they rotate together can be produced by the movement of the brake lever (1) in the brake actuating direction;
e) a lost-motion mechanism is provided, which serves to break the common rotation connection of the drive arrangement (8, 9,12) and the adjusting device (2, 4) as it is overcoming a predetermined brake release clearance,
characterized by the following features:
f) the drive arrangement (8, 9, 12) is in the form of a rack-and-pinion gear and has an annular gear (8) which is connected to the fixed reference point (7) so that they rotate together and engages with a first toothed section (10) of the rack (9) of the rack-and-pinion gear;
g) the rack (9) has a second toothed section (11) which engages with a pinion (12) driving the adjusting device (2, 4);
h) the housing (25) of the brake lever (1) surrounding the rack-and-pinion gear is provided in the longitudinal direction of the rack (9) with free spaces (30, 31) which are constructed so that the possible stroke of the brake lever (1), relative to the fixed reference point (7), and consequently the stroke of the rack, can be greater than that preset by the brake release clearance.

2. A device according to claim 1, characterized in that the lost motion mechanism (16, 17; 28, 29) is formed from a gear coupling (16, 17;, 28, 29) arranged between the pinion (12) and a coupling member (14) of the one-way coupling (13, 14, 15), which gear coupling has a lost motion arranged to be produced by a tooth clearance (5) that corresponds to the preset brake release clearance.

3. A device according to claim 2, characterized in that the gear coupling (16, 17; 28, 29) is formed from at least one tooth (16) or one slot (17) of the pinion (12) and at least one slot (28) or one tooth (29) of the coupling member (12) of the one-way coupling (13, 14, 15).

4. A device according to claim 3, characterized in that the teeth (16, 29) or slots (17, 28) are arranged in each case on the inner circumference of the pinion (12) and on the outer circumference of the coupling member (14) respectively.

## Revendications

1. Dispositif de rattrapage automatique d'un frein, en particulier d'un frein de véhicule, présentant les caractéristiques suivantes:
a) il est prévu un levier de frein (1) agencé sur un arbre d'actionnement de frein, comportant un dispositif de rattrapage (2, 4) entre le levier de frein (1) et l'arbre d'actionnement de frein, par lequel l'arbre de frein peut être réglé autour de son axe de rotation, par rapport au levier de frein (1);
b) pour actionner le dispositif de rattrapage (2, 4), il est prévu un dispositif d'entraînement (8, 9, 12) qui est agencé entre un point de référence (7) fixe par rapport au levier de frein (1) et le dispositif de rattrapage (2, 4);
c) le dispositif d'entraînement (8, 9, 12) peut être relié au dispositif de rattrapage (2, 4) par l'intermédiaire d'un accouplement unidirectionnel (13, 14, 15) qui ne forme une liaison solidaire en rotation du dispositif d'entraînement (8, 9, 12) avec le dispositif de rattrapage (2, 4) que lorsque le dispositif de rattrapage est déplacé dans la direction provoquant un actionnement du frein, pour réduire le jeu des garnitures entre les mâchoires de frein et le tambour de frein;
d) l'accouplement unidirectionnel (13, 14, 15) est réalisé de telle manière que la liaison solidaire en rotation du dispositif d'entraînement (8, 9, 12) avec le dispositif de rattrapage (2, 4) peut être engendrée par le mouvement du levier de frein (1) dans la direction d'actionnement du frein;
e) il est prévu un dispositif à course morte qui sert à neutraliser la liaison solidaire en rotation du dispositif d'entraînement (8, 9, 12) avec le dispositif de rattrapage (2, 4) pendant qu'un jeu de garnitures prédéterminé est surmonté,
caractérisé par les caractéristiques suivantes:
f) le dispositif d'entraînement (8, 9, 12) est réalisé sous la forme d'un entraînement à crémaillère (8, 9, 12) et présente une couronne dentée (8) reliée solidairement en rotation avec le point de référence (7) fixe, la couronne dentée étant en engagement avec une première denture (10) de la crémaillère (9) de l'entraînement à crémaillère ;
g) la crémaillère (9) présente une seconde denture (11) qui est en engagement avec un pignon (12) capable d'entraîner le dispositif de rattrapage (2, 4);
h) le boîtier (25) du levier de frein (1) entourant l'entraînement à crémaillère est pourvu en direction longitudinale de la crémaillère (9) d'espaces libres (30, 31) qui sont réalisés de telle sorte que le basculement possible du levier de frein (1) par rapport au point de référence fixe (7), et ainsi la course de la crémaillère, peut être plus grand que celui qui est donné par le jeu des garnitures.

2. Dispositif selon la revendication 1, caractérisé en ce que le dispositif à course morte (16, 17; 28, 29) est formé par un accouplement à dents (16, 17; 28, 29) agencé entre le pignon (12) et un élément d'accouplement (14) de l'accouplement unidirectionnel (13, 14, 15), l'accouplement à dents présentant une course morte qui peut être engendrée par un jeu (5) entre les dents, et qui correspond au jeu prédéterminé des garnitures.

3. Dispositif selon la revendication 2, caractérisé en ce que l'accouplement à dents (16, 17; 28, 29) est formé par au moins une dent (16) ou un intervalle interdentaire (17) du pignon (12) et au moins un intervalle interdentaire (28) ou une dent (29) de l'élément d'accouplement (14) de l'accouplement unidirectionnel (13, 14, 15).

4. Dispositif selon la revendication 3, caractérisé en ce que les dents (16, 29) ou les intervalles interdentaires (17, 28) sont agencés sur la périphérie intérieure du pignon (12) ou sur la périphérie extérieure de l'élément d'accouplement (14), respectivement.
